# EUROPÄISCHE PATENTSCHRIFT

(11) **EP 1 970 101 B1**
(45) Veröffentlichungstag und Bekanntmachung des Hinweises auf die Patenterteilung: **18.05.2011**
(21) Anmeldenummer: 07005098.4
(22) Anmeldetag: 13.03.2007
(51) Int. Cl.: A62B 3/00, B60Q 3/02, B64D 25/08, G09F 13/20, G09F 19/22, F21S 4/00

(54) **Fluchtwegmarkierung für ein Flugzeug**
Escape route markings for an airplane
Marquage de chemin de fuite pour un avion

(43) Veröffentlichungstag der Anmeldung: 17.09.2008
(73) Patentinhaber: Lufthansa Technik AG, 22335 Hamburg (DE)
(72) Erfinder: Suttler, Wolfgang, D-25469 Halstenbek (DE)
(74) Vertreter: Hauck Patent- und Rechtsanwälte

(56) Entgegenhaltungen:
- GB-A- 2 366 362
- US-A- 5 775 016

## Beschreibung

Die vorliegende Erfindung betrifft eine Fluchtwegmarkierung für ein Flugzeug.

Es ist bekannt zur Fluchtwegmarkierung in Flugzeugen, die auch als Notfallmarkierung bezeichnet wird, photolumineszente Streifen am Fußboden des Flugzeugs anzuordnen. Photolumineszenz wird gelegentlich auch als Nachleuchten und/oder Phosphorisieren bezeichnet. Die sicherheitstechnischen Anforderungen sind beispielsweise in der Deutschen Industrie Norm DIN 67 510 spezifiziert. Die Streifen werden geradlinig im Fußboden verlegt und weisen den Passagieren und der Besatzung im Notfall den Weg zu den Ausgängen und Notausstiegen. In der Vergangenheit haben sich bei der Ausgestaltung von Flugzeugen zunehmend photolumineszente Streifen durchgesetzt, da diese ausfallsicher sind und ohne Stromversorgung betrieben werden können.

Aus WO 96/33093 A1 ist beispielsweise eine Notfallbeleuchtung bekannt, bei der ein photolumineszenter Streifen in einem transparenten Trägerelement angeordnet ist. Das Trägerelement kann dabei ein-, zwei- oder dreistückig ausgebildet sein. Jedes Trägerelement besitzt eine langgestreckte rechteckige Form und kann dementsprechend in einer 90°- und 180°-Orientierung zu einem anderen Trägerelement verlegt werden.

Aus WO 94/17766 A1 ist eine photolumineszente Reflektorschicht bekannt. Es wird vorgeschlagen, aus dem flächigen Material längliche Streifen herzustellen.

Aus US 4,401,050 ist eine photolumineszente Fluchtwegmarkierung bekannt, die aus länglichen Streifen besteht. Als Richtungsanzeiger für den markierten Fluchtweg sind Pfeile vorgesehen.

Aus WO 87/02813 A1 sind Richtungsanzeiger für den Fluchtweg bekannt, die mit photolumineszenten Mitteln arbeiten, die entlang des Gangs des Flugzeugs als einzelne unverbundene Pfeile am Fußboden angeordnet sind.

Aus EP 0 489 561 A1 ist eine dauerhaft fluoreszierende Lage bekannt, bei der Farbpigmente in eine Polymermatrix eingebunden sind. Hierbei kann das fluoreszente Material in einem Träger eingebunden sein, der dem Fluoreszenslicht durch zusätzliche Filter verschiedene optische Eigenschaften verleiht.

Aus FR 2 308 155 A1 sind mit photolumineszentem Material hinterlegte Sicherheitsschilder bekannt.

US 4,208,300 beschreibt eine Zusammensetzung für photolumineszentes Material, wie es an Treppenwegen und im Straßenverkehr verwendet werden kann.

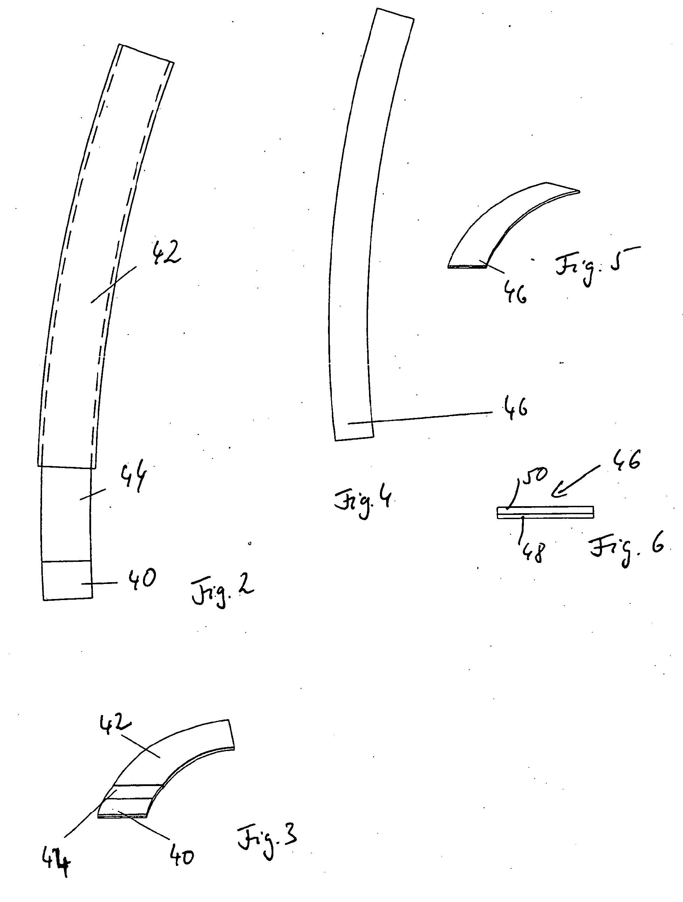

Aus US 5,775,016 sind beleuchtete Hinweisschilder bekannt. Die Hinweisschilder bestehen aus einer photolumineszenten Platte, die mit einem elektrolumineszenten Streifen kombiniert wird. Fig. 4a zeigt ein gebogenes Hinweisschild.

Gegenwärtig ist festzustellen, daß die Anforderungen an die Gestaltung bei der Möblierung des Fluggastinnenraums sich ändern. Insbesondere besteht der Trend dahin, nicht länger rechtwinklige Möbel vorzusehen, sondern auch geschwungene Möbelkonturen einzusetzen. Neben der ästhetischen Wirkung einer geschwungenen Möblierung, beispielsweise Sitzbänken mit geschwungener Außenkontur, Schränke und Theken im Servicebereich, besitzen geschwungene Möbel auch sicherheitstechnische Vorzüge, da die Passagiere sich beispielsweise weniger leicht verletzen können. Die zunehmend aufwendiger gestaltete Möblierung in dem Passagierraum macht es notwendig, auch die Fluchtwegmarkierung flexibel hieran anpassen zu können.

Der vorliegenden Erfindung liegt die Aufgabe zugrunde, eine Fluchtwegmarkierung bereitzustellen, die sich mit einfachen Mitteln an unterschiedlichste Anforderungen und Gestaltungen im Passagierraum eines Flugzeugs anpassen läßt. Erfindungsgemäß wird die Aufgabe durch eine Fluchtwegmarkierung mit den Merkmalen aus Anspruch 1 gelöst. Vorteilhafte Ausgestaltungen bilden die Gegenstände der Unteransprüche.

Die erfindungsgemäße Fluchtwegmarkierung ist für ein Flugzeug vorgesehen und weist ein nachleuchtendes, photolumineszentes Material auf. Das photolumineszente Material besteht aus mehreren Elementen, die auf dem Fußboden verlegt sind, um im Notfall den Passagieren und der Besatzung den kürzesten Weg zu einem Notausgang zu zeigen. Erfindungsgemäß besitzt mindestens eines der verlegten Elemente eine gebogene Form. Das Element mit der gebogenen Form besitzt einen gekrümmten Verlauf, der es erlaubt, den Fluchtweg nicht nur gerad- und/oder rechtwinklig zu verlegen, sondern die Fluchtwegmarkierung auch in Bögen und Kurven verlaufen zu lassen. Hierdurch kann die Fluchtwegmarkierung individuell an die Ausgestaltungen des Flugzeuginnenraums angepaßt werden und dabei vorgegebenen Konturen folgen. Mit gebogener Form der Elemente oder mit gebogenen Elementen werden streifenförmige Elemente bezeichnet, die in der Ebene, in der sie verlegt sind, sich nicht geradlinig erstrecken, sondern einen Bogen beschreiben. Erfindungsgemäß ist das gebogene Element durch ein gebogenes Abdeckelement aus einem transparenten Material abgedeckt. Das Abdeckelement entspricht dabei in seiner Form dem gebogenen Element aus photolumineszenten Material. Die Abdeckung bietet einen Trittschutz, der das photolumineszente Material vor Beschädigungen schützt.

In einer bevorzugten Ausgestaltung ist das photolumineszente Material auf und/oder in einem transparenten Trägermaterial vorgesehen. Das photolumineszente Material kann beispielsweise aus photolumineszenten Pigmenten bestehen, die in einer Polymermatrix eingebunden werden. Alternativ können die photolumineszenten Pigmente beispielsweise auch auf ein transparentes Trägermaterial aufgedruckt werden. In einer zweckmäßigen Ausgestaltung, um eine Vorratshaltung der Elemente zu ermöglichen, besitzen die gebogenen Elemente einen vordefinierten Krümmungsradius. Ferner kann vorgesehen werden, daß zu jedem vordefinierten Krümmungsradius mindestens zwei Elemente mit unterschiedlicher Länge vorgesehen sind. Elemente mit gleichem Krümmungsradius und unterschiedlicher Länge erlauben es, diese zu Bögen mit dementsprechenden Krümmungsradien zusammenzusetzen.

In einer alternativen Ausgestaltung ist auch möglich, mindestens ein gebogenes Element vorzusehen, das einen nicht konstanten Krümmungsradius besitzt. So kann beispielsweise das gebogene Element mehrere Abschnitte aufweisen, von denen mindestens zwei jeweils einen unterschiedlichen Krümmungsradius besitzen. Gebogene Elemente mit verschiedenen Krümmungsradien können auch speziell an die Form der Möbel und Einbauten im Flugzeuginnenraum angepaßt sein, wobei der Krümmungsradius sich dann auch stetig ändern kann.

In einer bevorzugten Ausgestaltung ist das Abdeckelement mit einem im Wesentlichen U-förmigen Querschnitt versehen, dessen Schenkel seitlich oder unterhalb des photolumineszenten Materials gehalten sind. Die Schenkel des Abdeckelementes sind mit dem gebogenen Element verbunden und halten das Abdeckelement an dem gebogenen Element fest.

Zu einer besseren Handhabung ist bevorzugt vorgesehen, daß das photolumineszente Material auf einem U-förmigen Trägerelement angeordnet ist und das Abdeckelement an dem Trägerelement befestigt ist.

In einer weiteren möglichen Ausgestaltung ist das Abdeckelement als ein gebogenes Hohlprofil ausgebildet. Das gebogene Element wird dann in das gebogene Hohlprofil eingeschoben. Das gebogene Hohlprofil kann im Querschnitt eine geschlossene Form aufweisen oder beispielsweise entlang seiner Unterseite eine Unterbrechung aufweisen.

Ebenfalls ist es möglich, das gebogene Element mit einem transparenten Schrumpfschlauch zu ummanteln, der auf das gebogene Element aufgeschrumpft ist. Der Schrumpfschlauch ist mindestens an einer Seite transparent ausgebildet und erlaubt so ein Durchscheinen des photolumineszenten Materials. Der Schrumpfschlauch besitzt bevorzugt eine Wandstärke von 0,1 bis 0,8 mm, zweckmäßigerweise im Bereich von 0,3 bis 0,5 mm.

Bevorzugte Ausführungsbeispiele werden nachfolgend anhand der Figuren näher erläutert. Es zeigt:
- Fig. 1: in einer schematischen Ansicht den vorderen Bereich eines Flugzeugrumpfs mit Passagierraum und Cockpit,
- Fig. 2: eine Fluchtwegmarkierung, bei der das photolumineszente Material in eine Abdeckung eingeschoben wird,
- Fig. 3: eine perspektivische Ansicht des photolumineszenten Elements aus Fig. 2,
- Fig. 4: ein gebogenes Element mit photolumineszentem Material in der Draufsicht,
- Fig. 5: eine perspektivische Ansicht des Elements aus Fig. 4,
- Fig. 6: einen Querschnitt durch das Element mit photolumineszentem Material aus Fig. 4,
- Fig. 7: ein gebogenes photolumineszentes Element, das in einer Abdeckung einschiebbar ist,
- Fig. 8: drei verschiedene Ausgestaltungen für Abdeckungen des photolumineszenten Materials,
- Fig. 9: ein gebogenes photolumineszentes Material mit einem Schrumpfschlauch in einer Ansicht von oben, und
- Fig. 10: das gebogene Element aus Fig. 9 in einer perspektivischen Ansicht.

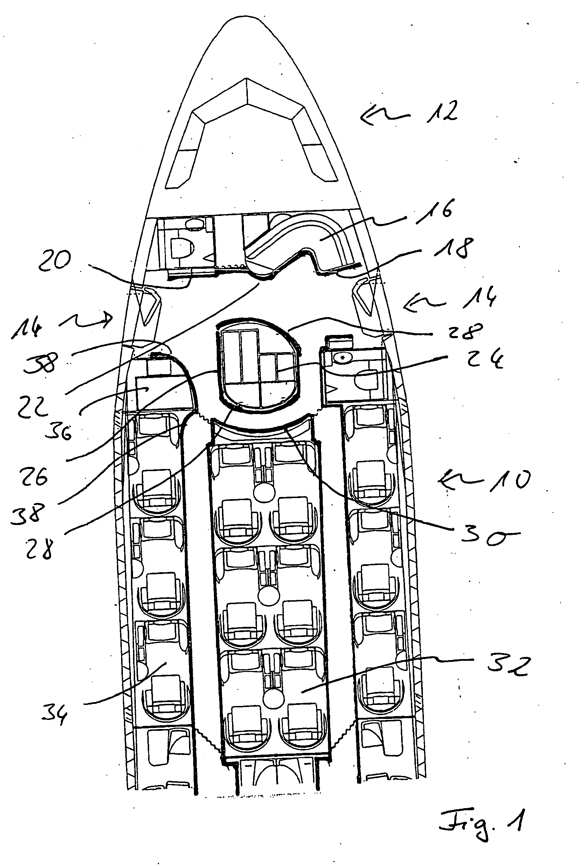

Fig. 1 zeigt einen vorderen Abschnitt eines Flugzeugs mit einem Passagierraum 10 und einem Cockpit 12. Im vorderen Bereich des Passagierraums 10 sind seitlich zwei Türen 14 vorgesehen, die auch für den Notausstieg dienen.

Im Bereich zwischen Passagierraum 10 und Cockpit 12 sind eine Reihe von Möbeln und Einbauten 16 vorgesehen. Die Möbel und Einbauten 16 sind vor den Ausgangstüren 14 angeordnet. Die vordere Kante der Möbel und Einbauten 16 ist durch eine Fluchtwegmarkierung 18 gekennzeichnet. Die Fluchtwegmarkierung 18 besitzt eine Reihe von geradlinigen Abschnitten 20, die sich mit gebogenen Abschnitten 22 abwechseln.

Die Fluchtwegmarkierung 18 ist aus den noch nachfolgend näher erläuterten Elementen zusammengesetzt, die sich an geradlinige Elemente anschließen.

Ein zentrales Schrankelement 24 ist ebenfalls durch geschwungen verlaufende Fluchtwegmarkierungen gekennzeichnet. In Flugzeuglängsrichtung besitzt die Fluchtwegmarkierung 26 zwei gerade parallel zueinander verlaufende Abschnitte 26, an die sich beidseitig geschwungene Abschnitte 28 anschließen. Deutlich zu erkennen ist, daß der vordere geschwungene Abschnitt 28 eine andere Krümmung besitzt als der heckwärtsweise geschwungene Abschnitt 28. Auch ist zu erkennen, daß der geschwungene Abschnitt im vorderen Bereich keinen konstanten Krümmungsradius besitzt, sondern einen variablen Krümmungsradius, der entlang dem gekrümmten Element variiert.

Auch der vordere Abschluß 30 der Mittelreihe 32 im Passagierraum besitzt eine geschwungene Fluchtwegmarkierung. An den Seitenreihen 34 können ebenfalls geschwungene Abschnitte der Fluchtwegmarkierung, beispielsweise am Übergang von der Sitzreihe zu einem Begrenzungselement 36, vorliegen. Hierbei können auch gegensinnig gekrümmte Fluchtwegmarkierungen 38, 40 eingesetzt werden, um den Fluchtweg präzise zu kennzeichnen. Auch können (nicht dargestellt) Einbuchtungen zwischen den Sitzen vorgesehen sein.

Fig. 2 zeigt in einer schematischen Ansicht ein gebogenes Element einer Fluchtwegmarkierung. Das Element besteht aus photolumineszentem Material 40, das in ein Abdeckelement 42 eingeschoben ist. Um die gewünschte Farbe der Fluchtwegmarkierung zu erhalten, kann auf dem photolumineszenten Element 40 noch eine transparente Farbfilterfolie 44 angeordnet werden.

Fig. 3 zeigt das Element aus Fig. 2 in einer perspektivischen Ansicht, wobei auch hier die Filterfolie 44 noch nicht vollständig in das Abdeckelement 42 eingeschoben ist. Bei einer späteren Verwendung der Trägerelemente erfolgt die Markierung eines Fluchtwegs im wesentlichen einfarbig, d.h. entweder wird das photolumineszente Material 40 ohne zusätzliche Farbfilterfolie 44 verwendet oder sämtliche Elemente tragen eine Farbfilterfolie 44 mit der gewünschten Farbe.

Fign. 4 und 5 zeigen einen Aufbau für ein gebogenes Element 46, bei dem keine separate Abdeckung vorgesehen ist. Das gebogene Element 46 besitzt, wie in Fig. 6 dargestellt, einen zweischichtigen Aufbau. Hierbei kann beispielsweise die untere Schicht 48 das photolumineszente Material sein und die obere Schicht 50 eine Abdeckung 50 aus einem transparenten Material. Je nach verwendetem Binder für das photolumineszente Material kann auch die Schicht 50 das in einem Kunststoff eingebundene photolumineszente Material darstellen, das auf ein Trägerelement 48 aufgebracht ist. Die Ausgestaltung des zweischichtigen gebogenen Elements eignet sich besonders gut für flache Bodenbeläge, die sich an das gebogene Element anschließen. Allgemein ist es so, daß die gebogenen Elemente der Fluchtwegmarkierung die gleiche Höhe wie die geraden Elemente der Fluchtwegmarkierung besitzen sollten.

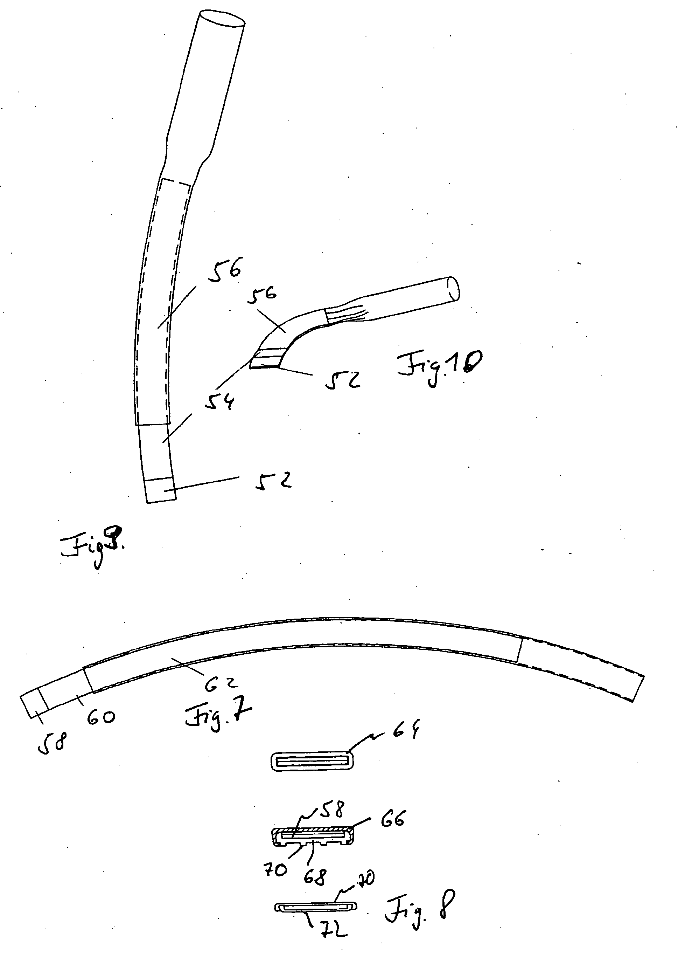

Fig. 7 zeigt ein gebogenes Element 58, auf dem eine Farbfilterfolie 60 angeordnet ist. Das gebogene Element 58 und die Farbfilterfolie 60 werden durch eine Abdeckung 62 verschlossen. Fig. 8 zeigt eine Reihe von unterschiedlichen Ausgestaltungen für die Abdeckung. Die Abdeckung 64 in Fig. 8 ist ein geschlossenes Hohlprofil aus transparentem Material, in das das gebogene Element eingeschoben wird. Abdeckung 66 in Fig. 8 besitzt ein U-förmiges Profil, wobei die Seitenschenkel schnappend hinter einen Vorsprung an einem Trägerelement 68 greifen. Das Trägerelement 68 besitzt ein U-förmiges Profil mit sich in Längsrichtung erstreckenden Stegen 70. Das Trägerelement 68 nimmt das photolumineszente gebogene Element 58 auf; über die Abdeckung 66 wird das photolumineszente Element 58 in dem Trägerelement 68 gesichert. Abdeckung 70 in Fig. 8 zeigt eine weitere alternative Ausgestaltung, bei der das Abdeckelement seitlich klemmend an einem Trägerelement 72 befestigt ist. Das Trägerelement 72 besitzt ein U-Profil, wobei Trägerelement 72 alternativ auch mit in Längsrichtung verlaufenden Stegen versehen sein kann.

Die Hohl- und Schnapp-Profile 62, 66 und 70 können direkt bei der Extrusion in gekrümmter Form hergestellt werden, beispielsweise durch Ablenken des Extrusionsstranges mittels Rollen noch vor der vollständigen Erstarrung des Extrudats (vorteilhaft bei konstanten Krümmungsradien) oder durch nachträgliches Erwärmen und Umformen eines geraden Extrusionsstranges. Alternativ können die Profile auch gegossen werden, beispielsweise durch Spritzguß.

Fign. 9 und 10 zeigen eine alternative Umhüllung eines gebogenen Elements 52 mit einer Farbfolie 54. Um das gebogene Element trittsicher zu umschließen, ist ein Schrumpfschlauch 56 vorgesehen, der über eine Farbfilterfolie 54 und ein Element 52 gezogen wird und in der aufgezogenen Position aufgeschrumpft wird. Der hierfür eingesetzte Schrumpfschlauch kann eine Stärke von 3/10 bis 5/10 mm besitzen. Durch Einwirkung von Hitze und/oder Infrarotstrahlung wird der Schrumpfschlauch auf das Element aufgeschrumpft. Eine Verbindung des Materials des Schrumpfschlauchs mit dem gebogenen Element erfolgt hierbei nicht. Der Schrumpfschlauch hält sich ausschließlich durch seine Membranspannung auf dem gebogenen Element.

Das photolumineszente Material wird unabhängig davon, ob es in einem Trägerelement angeordnet ist oder nicht, mit dem Fußboden des Flugzeugs verbunden. Hierbei kommt ein Verkleben in Frage, wobei kleinere Stücken nicht verklebt werden, sondern bevorzugt mit dem Untergrund verschraubt werden. Die Herstellung der Elemente in gekrümmter Form kann auf verschiedene Weise erfolgen: Einerseits kann das Element als beschichtetes Plattenhalbzeug (beispielsweise Farbbeschichtungsverfahren, Kalandrieren oder Gießen) oder andererseits als Platte durch Extrusion hergestellt und anschließend in die gekrümmte Form geschnitten, gestanzt oder gesägt werden. Bevorzugt wird ein Wasserstrahlschneider hierfür eingesetzt.

Alternativ kann das Leuchtelement direkt in der gebogenen Form hergestellt werden. Bei der Extrusion, beispielsweise durch Ablenken des Extrusionsstranges mittels Rollen noch vor der vollständigen Erstarrung des Extrudats (vorteilhaft bei konstanten Krümmungsradien). Bei den anderen Verfahren werden beispielsweise. durch das Farbbeschichten gebogener Trägerstreifen oder das Gießen in entsprechende Formen die gebogenen Elemente hergestellt. Leuchtelemente, die mit Thermoplasten in gerader Form hergestellt werden, z.B. durch Spritzguß oder Extrusion, können nachträglich erwärmt und in die gekrümmte Form gebracht werden.

## Patentansprüche

1. Fluchtwegmarkierung für Flugzeuge, die ein nachleuchtendes, photolumineszentes Material aufweist, das in mehreren Elementen auf dem Fußboden verlegt ist, wobei mindestens ein Element (40; 46; 52; 58) eine gebogene Form besitzt, **dadurch gekennzeichnet, daß** ein gebogenes Abdeckelement (42; 64; 66; 70) aus einem transparenten Material für das gebogene Element vorgesehen ist.

2. Fluchtwegmarkierung nach Anspruch 1, **dadurch gekennzeichnet, daß** das photolumineszente Material auf und/oder in einem transparenten Trägermaterial vorgesehen ist.

3. Fluchtwegmarkierung nach Anspruch 1 oder 2, **dadurch gekennzeichnet, daß** jedes gebogene Element einen vordefinierten Krümmungsradius besitzt.

4. Fluchtwegmarkierung nach Anspruch 3, **dadurch gekennzeichnet, daß** zu jedem vordefinierten Krümmungsradius mindestens zwei Element mit unterschiedlicher Länge existieren.

5. Fluchtwegmarkierung nach Anspruch 1 öder 2, **dadurch gekennzeichnet, daß** mindestens ein gebogenes Element (28) einen nicht konstanten Krümmungsradius besitzt.

6. Fluchtwegmarkierung nach Anspruch 5, **dadurch gekennzeichnet, daß** das gebogene Element mehrere Abschnitte aufweist, von denen mindestens zwei einen unterschiedlichen Krümmungsradius besitzen.

7. Fluchtwegmarkierung nach einem der Ansprüche 1 bis 6, **dadurch gekennzeichnet, daß** das gebogene Element mit einem transparenten Material abgedeckt ist.

8. Fluchtwegmarkierung nach einem der Ansprüche 1 bis 8, **dadurch gekennzeichnet, daß** das Abdeckelement (66; 70) einen im wesentlichen U-förmigen Querschnitt aufweist, wobei die Schenkel seitlich an dem oder unterhalb des photolumineszenten Materials gehalten sind.

9. Fluchtwegmarkierung nach Anspruch 9, **dadurch gekennzeichnet, daß** das photolumineszente Material auf einem U-förmigen Trägerelement (68, 70) angeordnet ist.

10. Fluchtwegmarkierung nach einem der Ansprüche 1 bis 8, **dadurch gekennzeichnet, daß** das Abdeckelement als ein gebogenes Hohlprofil (64) ausgebildet ist.

11. Fluchtwegmarkierung nach Anspruch 7, **dadurch gekennzeichnet, daß** das gebogene Element von einem transparenten Schrumpfschlauch (56) ummantelt ist, der auf das gebogene Element aufgeschrumpft ist.

12. Fluchtwegmarkierung nach Anspruch 12, **dadurch gekennzeichnet, daß** der Schrumpfschlauch eine Wandstärke von 0,1 bis 0,8 mm aufweist.

## Claims

1. Escape path marking for aircraft, which has an afterglowing photoluminescing material which is placed in several elements on the floor, wherein at least one element (40; 46; 52; 58) has a bent shape, **characterised in that** a bent covering element (42; 64; 66; 70) made of a transparent material is provided for the bent element.

2. Escape path marking according to Claim 1, **characterised in that** the photoluminescing material is provided on and/or in a transparent carrier material.

3. Escape path marking according to Claim 1 or 2, **characterised in that** each bent element has a predefined radius of curvature.

4. Escape path marking according to Claim 3, **characterised in that** at least two elements of different lengths exist for each predefined radius of curvature.

5. Escape path marking according to Claim 1 or 2, **characterised in that** at least one bent element (28) has a non-uniform radius of curvature.

6. Escape path marking according to Claim 5, **characterised in that** the bent element has a plurality of portions, of which at least two have a different radius of curvature.

7. Escape path marking according to one of Claims 1 to 6, **characterised in that** the bent element is covered by a transparent material.

8. Escape path marking according to one of Claims 1 to 7, **characterised in that** the covering element (66; 70) has a substantially U-shaped cross section, the limbs being held to the side of or below the photoluminescing material.

9. Escape path marking according to Claim 8, **characterised in that** the photoluminescing material is arranged on a U-shaped carrier element (68, 70).

10. Escape path marking according to one of Claims 1 to 8, **characterised in that** the covering element is configured as a bent hollow profile (64).

11. Escape path marking according to Claim 7, **characterised in that** the bent element is encased by a transparent heat-shrinkable tube (56) which is shrunk onto the bent element.

12. Escape path marking according to Claim 12, **characterised in that** the heat-shrinkable tube has a wall thickness of 0.1 to 0.8 mm.

## Revendications

1. Marquage de chemin de fuite pour des avions, qui présente un matériau phosphorescent photoluminescent qui est posé en plusieurs éléments sur le plancher, au moins un élément (40 ; 46 ; 52 ; 58) possédant une forme courbe, **caractérisé en ce qu'**il est prévu un élément de recouvrement (42 ; 64 ; 66 ; 70) courbe en matériau transparent pour l'élément courbe.

2. Marquage de chemin de fuite selon la revendication 1, **caractérisé en ce que** le matériau photoluminescent est prévu sur et/ou dans un matériau support transparent.

3. Marquage de chemin de fuite selon la revendication 1 ou 2, **caractérisé en ce que** chaque élément courbe possède un rayon de courbure prédéfini.

4. Marquage de chemin de fuite selon la revendication 3, **caractérisé en ce que**, pour chaque rayon de courbure prédéfini, il existe au moins deux éléments de longueur différente.

5. Marquage de chemin de fuite selon la revendication 1 ou 2, **caractérisé en ce qu'**au moins un élément courbe (28) possède un rayon de courbure non constant.

6. Marquage de chemin de fuite selon la revendication 5, **caractérisé en ce que** l'élément courbe présente plusieurs tronçons dont au moins deux possèdent un rayon de courbure différent.

7. Marquage de chemin de fuite selon une des revendications 1 à 6, **caractérisé en ce que** l'élément courbe est recouvert d'un matériau transparent.

8. Marquage de chemin de fuite selon une des revendications 1 à 8, **caractérisé en ce que** l'élément de recouvrement (66 ; 70) présente une section transversale essentiellement en forme de U, les branches étant retenues latéralement sur le matériau photoluminescent ou au-dessous de ce dernier.

9. Marquage de chemin de fuite selon la revendication 9, **caractérisé en ce que** le matériau photoluminescent est disposé sur un élément support (68, 70) en forme de U.

10. Marquage de chemin de fuite selon une des revendications 1 à 8, **caractérisé en ce que** l'élément de recouvrement est constitué en tant que profilé creux (64) courbe.

11. Marquage de chemin de fuite selon la revendication 7, **caractérisé en ce que** l'élément courbe est enveloppé d'un tuyau rétractable (56) transparent qui est fretté sur l'élément courbe.

12. Marquage de chemin de fuite selon la revendication 12, **caractérisé en ce que** le tuyau rétractable présente une épaisseur de paroi de 0,1 à 0,8 mm.
